# FASCICULE DE BREVET EUROPEEN

(11) **EP 4 450 926 B1**
(45) Date de publication et mention de la délivrance du brevet: **25.06.2025**
(21) Numéro de dépôt: 24159706.1
(22) Date de dépôt: 26.02.2024
(51) Int. Cl.: G01C 23/00, G08G 5/00, G02B 27/01, G08G 5/21, G08G 5/53

(54) **PROCÉDÉ ET DISPOSITIF D'AIDE AU PILOTAGE D'UN AÉRONEF AVEC UN AFFICHEUR TÊTE HAUTE**
VERFAHREN UND VORRICHTUNG ZUR UNTERSTÜTZUNG DER STEUERUNG EINES FLUGZEUGS MIT EINER HEAD-UP-ANZEIGE
METHOD AND DEVICE FOR ASSISTING THE PILOTING OF AN AIRCRAFT WITH A HEAD-UP DISPLAY

(30) Priorité: 17.04.2023 FR 2303688
(43) Date de publication de la demande: 23.10.2024
(73) Titulaire: Airbus Helicopters, 13725 Marignane Cedex (FR)
(72) Inventeur: BAUDRY, Jean-Pierre, 83200 TOULON (FR)
(74) Mandataire: GPI Brevets

(56) Documents cités:
- "EuroFighter C.16 FLIGHT MANUAL", 31 March 2005 (2005-03-31), XP055179064, Retrieved from the Internet <URL:http://air.felisnox.com/view.php?name=euroa.pdf> [retrieved on 20150325]
- ANONYMOUS: "FlyRealHUDs Very Brief User's Manual", 31 December 2012 (2012-12-31), pages 1 - 22, XP093095948, Retrieved from the Internet <URL:https://flyrealhuds.com/wp-content/uploads/2020/01/FlyRealHUDs-AirTransport-Users-Manual.pdf> [retrieved on 20231027]

## Description

La présente invention concerne un procédé et un dispositif d'aide au pilotage d'un aéronef avec un afficheur tête-haute.

Un aéronef peut être muni de divers afficheurs pour afficher des informations utiles pour un opérateur. En outre, un aéronef peut comprendre un système de pilotage automatique apte à piloter l'aéronef, pour qu'au moins un paramètre de vol tende vers une valeur de consigne.

Le terme « opérateur » peut désigner un pilote, un copilote, voire toute personne officiant dans un poste de pilotage.

Le terme « information » peut désigner des symboles qui incluent ; à titre d'exemple ; des formes géométriques, des chiffres, des lettres, ces symboles pouvant varier dans le temps et pouvant représenter des grandeurs physiques ou des objets notamment.

Parmi ces informations, l'homme du métier distingue des informations dites « primaires » et des informations dites « secondaires ». Les informations primaires sont relatives à des informations de pilotage à court terme, voire à des informations essentielles de pilotage. Les informations secondaires regroupent toutes les autres informations affichables et, par exemple, des données météorologiques, des données d'établissement d'une route à suivre ...

Pour présenter ces diverses informations à un opérateur, un aéronef peut comprendre un ou plusieurs afficheurs qualifiés de « tête-basse ». Un afficheur tête-basse est visible par un opérateur lorsque cet opérateur dirige son regard vers le bas et vers l'intérieur du poste de pilotage. Un afficheur tête-basse peut être, par exemple, porté par une planche de bord, voire un pupitre.

Pour mémoire, lorsque l'opérateur dirige son regard vers le haut et vers l'extérieur de l'aéronef, et donc notamment vers l'environnement situé au-dessus d'une planche de bord et d'un pupitre, l'homme du métier considère que cet opérateur se trouve dans une position « tête-haute ». A l'inverse, lorsque l'opérateur regarde l'intérieur de l'aéronef, et notamment la planche de bord ou le pupitre, l'homme du métier considère que cet opérateur se trouve dans une position « tête-basse ».

Un afficheur tête-basse peut, par exemple, comprendre un « écran ». En particulier, un écran multifonction peut afficher diverses pages pouvant contenir diverses informations. Ainsi, un écran multifonction peut afficher une ou plusieurs pages contenant des informations primaires et / ou des informations secondaires. Un opérateur peut choisir la page à afficher.

Pour prendre connaissance des informations présentes sur un tel afficheur tête-basse, un opérateur doit donc régulièrement porter son regard vers l'intérieur du poste de pilotage. Toutefois, lorsque l'aéronef se trouve près du relief ou d'un obstacle, par exemple lors d'une opération de treuillage ou de secours, un pilote regarde fréquemment vers l'extérieur du poste de pilotage pour détecter un éventuel danger. Ainsi, consulter fréquemment un afficheur tête-basse dans une telle situation augmente la charge de travail du pilote, voire les risques d'accident.

Les documents EP 3454016 et EP 3869158 divulguent des affichages tête basse.

Pour résoudre ce problème, un aéronef peut aussi comprendre un afficheur tête-haute afin de présenter des informations importantes à un opérateur lorsque cet opérateur est dans la position tête-haute.

Par exemple, un afficheur tête-haute peut comprendre un écran d'un casque porté par un pilote, un moyen de projection rétinien, un moyen de projection sur parebrise, ou un dispositif connu sous l'expression anglaise « Head Up display » ou son acronyme HUD. Un afficheur tête-haute peut comprendre, par exemple, un système dénommé « head mounted display » en langue anglaise, un système dénommé « head worn display » en langue anglaise, un système dénommé « near eye display » en langue anglaise ou encore un système dénommé « Helmet Mounted Display » lorsque le système est monté sur un casque, voire un système dénommé par exemple « Helmet Mounted Sight & Display ».

Indépendamment de la manière de réaliser un afficheur tête-haute, cet afficheur tête-haute peut permettre de diminuer la charge de travail d'un pilote en lui évitant de consulter les afficheurs tête-basse. Les informations affichées sur l'afficheur tête-haute sont superposées à la vue extérieure, là où le pilote prend les références visuelles indispensables au pilotage à vue de son aéronef. Pour illustrer cet aspect, lors d'une opération de treuillage, un pilote peut prendre connaissance des informations tête-haute en observant la scène survolée au travers d'un parebrise. Le pilote n'a alors pas besoin de regarder l'intérieur du poste de pilotage.

De plus, l'afficheur tête-haute peut collimater les images affichées à l'infini ou du moins à une distance bien supérieure à la distance séparant le pilote ou le copilote de la planche de bord. Le pilote ou le copilote n'a ainsi aucune mise au point oculaire à effectuer afin de passer de la vue extérieure à la lecture des informations affichées sur l'afficheur tête-haute. Cette caractéristique permet de limiter la fatigue de l'utilisateur et réduit le temps nécessaire pour accéder aux informations affichées.

L'afficheur tête-haute permet également d'afficher des informations superposées à l'environnement extérieur : L'homme du métier parle alors d'informations conformes. Par exemple, un symbole peut-être positionné à l'emplacement précis du point d'atterrissage prédéterminé.

Un afficheur tête-haute est donc intéressant. Cependant, les informations affichées doivent être limitées. En effet, l'affichage d'un grand nombre d'informations sur l'afficheur tête-haute peut finalement empêcher l'utilisateur de distinguer correctement l'environnement extérieur ce qui serait contraire au but de l'afficheur tête-haute. Ainsi, les informations affichées sur un afficheur tête-haute usuel sont généralement limitées aux informations de pilotage essentielles, et ne comprennent souvent pas les informations pourtant utiles relatives à un système de pilotage automatique.

En effet, un pilote peut avoir par exemple un mode de pilotage automatique engagé pour voler en palier. Le pilote peut manœuvrer les commandes de l'aéronef pour changer de niveau de vol, par exemple pour éviter un obstacle. Lorsque le pilote relâche les commandes, le système de pilotage automatique redevient actif. Le pilote peut avoir oublié que le système de pilotage automatique est engagé et peut être surpris par le comportement de l'aéronef résultant de la reprise du pilotage automatique.

A titre d'exemple, un afficheur tête basse peut présenter une image comprenant un indicateur de vitesse, une rose de cap, un indicateur d'altitude barométrique, un horizon artificiel. De plus, cette image peut contenir des symboles relatifs à un système de pilotage automatique actif, tels qu'une valeur de vitesse de consigne, une valeur d'un cap de consigne et une valeur d'une altitude de consigne, un index pointant la vitesse de consigne sur l'indicateur de vitesse, un index pointant le cap de consigne sur la rose de cap, un index pointant l'altitude de consigne sur l'indicateur d'altitude barométrique.

A l'inverse, l'afficheur tête-haute se contente de présenter une image comprenant un indicateur de vitesse, une échelle de cap, un indicateur d'altitude barométrique, et un symbole affiché de manière conforme et porteur du vecteur de direction de vol air de l'aéronef.

Selon un autre aspect, un afficheur tête-haute peut être monochrome ce qui limite les possibilités de transmettre des informations visuellement. En outre, un afficheur tête-haute peut comprendre une zone d'affichage restreinte, généralement circulaire/elliptique ou d'une forme patatoïde, contrairement à un écran rectangulaire d'un afficheur tête-basse.

La page internet www.code450.com/heads-up-display divulgue un afficheur tête-haute monochrome. Cet afficheur présente de nombreuses informations et notamment un bandeau indiquant les modes de pilotage automatique activés. Le champ de vision est relativement encombré.

Le rapport « symbologie des collimateurs tête haute - Etude pré réglementaire pour le SFACT » daté de 2002 et visible sur la page internet www.headupflight.net/documents/hudf.pdf présente un collimateur tête-haute présentant diverses informations lors d'une approche.

Le document FR 3038380 décrit un afficheur présentant notamment un symbole de pente, une échelle de pente, des symboles de contrainte et une consigne de guidage selon l'échelle de pente.

Ces documents sont intéressants mais montrent des afficheurs présentant des symboles dédiés à des consignes qui viennent de fait charger le champ de vision d'un opérateur.

Les documents suivants sont aussi connus :
« EuroFighter C.16 FLIGHT MANUAL », 31 mars 2005 (2005-03-31), XP055179064; extrait de l'Internet : URL :http://air.felisnox.com/view.php ?name=euroa.pdf, et
« FlyRealHUDs Very Brief User's Manual », 31 décembre 2012 (2012-12-31), XP093095948; extrait de l'Internet : URL :http://flyrealhuds.com/wp-content/uploads/2020/01/FlyRealHUDs-AirTransport-Users-Manual.pdf.

La présente invention a alors pour objet de proposer un procédé innovant permettant d'optimiser la charge de travail d'un opérateur d'un aéronef, et en particulier d'un pilote.

La présente invention vise ainsi un procédé d'aide au pilotage d'un aéronef comprenant un afficheur tête-haute et un système de pilotage automatique, le système de pilotage automatique comprenant une interface homme-machine de sélection pour choisir un mode de fonctionnement parmi plusieurs modes de fonctionnement prédéterminés comprenant un mode désengagé et un mode engagé afin de requérir un pilotage automatique d'au moins un paramètre, le système de pilotage automatique étant configuré dans le mode engagé pour contrôler au moins un actionneur de l'aéronef afin de faire tendre une valeur courante dudit paramètre vers une valeur de consigne.

Ce procédé comporte les étapes suivantes :
- détection avec un système de commande d'un mode courant appliqué parmi lesdits plusieurs modes de fonctionnement prédéterminés,
- commande de l'afficheur tête-haute avec le système de commande et affichage sur l'afficheur tête-haute d'un symbole porteur de ladite valeur courante selon une charte graphique propre au mode courant pour visualiser le mode courant, une première charte graphique appliquée lors du mode désengagé étant différente d'une deuxième charte graphique appliquée lors du mode engagé.

Ce procédé peut être mis en œuvre pour un ou plusieurs paramètres pouvant être pilotés par le système de pilotage automatique, et par exemple pour une altitude de l'aéronef, un cap de l'aéronef, une vitesse air indiquée de l'aéronef, un vecteur de direction de vol de l'aéronef, et/ou une tenue d'une position stationnaire. Le vecteur de direction de vol peut être dénommé en langue anglaise « Flight Path Vector » et peut être illustré par un symbole conforme.

L'expression « charte graphique » désigne la manière dont est affiché le symbole, en couvrant par exemple la forme d'un objet du symbole et/ou l'épaisseur d'un ou de plusieurs traits du symbole et/ou la présence ou l'absence d'un cadre ou d'un soulignage d'un objet du symbole. Le symbole illustrant une valeur courante d'un paramètre peut comprendre un objet présentant au moins un chiffre, au moins une lettre, une échelle associée avec au moins un chiffre et/ou un curseur, cet objet pouvant être encadré ou souligné.

Ce procédé propose ainsi d'afficher un seul et même symbole porteur à la fois de la valeur actuelle du paramètre concerné et de l'état du mode de fonctionnement du système de pilotage automatique concernant ce paramètre. Lorsque le symbole a un premier aspect défini par la première charte graphique, alors un opérateur en déduit que le mode de fonctionnement associé est le mode désengagé, le système de pilotage automatique ne pilotant pas ce paramètre. Par contre, lorsque le symbole a un deuxième aspect différent du premier aspect et défini par la deuxième charte graphique, alors un opérateur en déduit que le mode de fonctionnement associé est le mode engagé, le système de pilotage automatique pilotant ce paramètre.

D'un point de vue « Humain », la mise à jour de l'aspect visuel d'un symbole, par exemple via une modification de forme ou encore l'apparition d'un cadre ou d'un soulignement voire l'épaississement d'un trait, est suffisante pour permettre de mettre à jour la représentation mentale que se construit un opérateur vis-à-vis des modes de fonctionnement courants du système de pilotage automatique.

Par suite, le procédé permet à un opérateur de savoir facilement, même sur un afficheur tête-haute monochrome, et en limitant de façon significative d'occulter une partie de l'environnement extérieur, quel est le mode de fonctionnement courant du système de pilotage automatique au regard d'un ou de plusieurs paramètres. Le procédé ne nécessite pas l'affichage d'un symbole dédié au pilotage automatique, tel qu'un bandeau d'informations de pilotage automatique usuel, ou l'affichage d'une ou de plusieurs consignes en tant que telles, pour savoir quel est le mode de fonctionnement courant.

Le procédé a ainsi un impact limité sur le champ de vision d'un opérateur en n'ajoutant pas nécessairement des symboles lorsque le système de pilotage automatique est actif. La charge de travail d'un pilote, par exemple, est ainsi simplifiée puisque le pilote n'a pas besoin de consulter à cet effet un afficheur tête-basse, ou un afficheur tête-haute surchargé d'informations. La sécurité du vol peut alors être augmentée.

Le procédé peut de plus comporter une ou plusieurs des caractéristiques qui suivent.

Selon une possibilité, pour une même valeur courante, le symbole peut être dans une même position sur l'afficheur tête-haute quel que soit le mode courant.

Un même symbole prend des aspects différents lors d'un changement de mode de fonctionnement du système de pilotage automatique, mais ne bouge pas sur l'afficheur tête-haute. L'invention prévoit un unique symbole qui change d'aspect contrairement à des systèmes ayant deux symboles dissociés et indépendants porteurs respectivement d'une valeur courante d'un paramètre et d'une consigne.

Selon une possibilité compatible avec les précédentes, ledit symbole peut comporter un objet selon la première charte graphique, ledit symbole comportant ledit objet et un cadre entourant au moins partiellement l'objet selon la deuxième charte graphique.

Un tel objet peut prendre la forme par exemple d'un nombre, ou d'une échelle associée à un curseur et/ou à un nombre. La présence d'un cadre peut être aisément repérée par un opérateur afin de déterminer quel est le mode de fonctionnement courant en ce qui concerne le paramètre examiné.

Selon une autre possibilité, ledit symbole peut comporter un premier objet selon la première charte graphique, ledit symbole comportant selon la deuxième charte graphique un deuxième objet différent visuellement du premier objet.

le premier et le deuxième objets peuvent prendre la forme par exemple d'un nombre, d'une forme géométrique particulière, ou d'une échelle associée à un curseur et/ou à un nombre. En fonction de l'objet affiché pour présenter la valeur courante d'un paramètre, un opérateur peut aisément déduire quel est le mode de fonctionnement courant en ce qui concerne ce paramètre.

Par exemple, le premier objet peut comporter une première forme géométrique, le deuxième objet comportant une deuxième forme géométrique, la deuxième forme étant différente visuellement de la première forme.

A titre illustratif, un symbole illustrant de manière conforme un vecteur de direction de vol de l'aéronef peut de manière usuelle comprendre un cercle et deux segments alignés de part et d'autre du cercle lorsque le pilotage automatique du vecteur de direction de vol est désengagé. Dans le mode engagé, le rond peut être remplacé par un losange par exemple. Un opérateur peut ainsi facilement savoir si le mode de tenue du vecteur de direction de vol est engagé ou non.

De manière complémentaire ou alternative, le premier objet et le deuxième objet peuvent comporter au moins un même trait, le trait présentant une première épaisseur dans le premier objet, le trait présentant dans le deuxième objet une seconde épaisseur supérieure à la première épaisseur.

Selon l'exemple précédent, un symbole illustrant de manière conforme un vecteur de direction de vol de l'aéronef peut de manière usuelle comprendre un cercle et deux segments alignés de part et d'autre du cercle lorsque le pilotage automatique du vecteur de direction de vol est désengagé. Dans le mode engagé, les segments peuvent être réalisés avec des traits plus épais, le cercle ou le cas échéant le losange le remplaçant étant aussi réalisé avec de tels traits épais. Un opérateur peut ainsi facilement savoir si le mode de tenue du vecteur de direction de vol est engagé ou non.

Selon une possibilité compatible avec les précédentes, lesdits plusieurs modes de fonctionnement peuvent comporter un mode armé durant lequel ladite valeur de consigne est paramétrée, sous condition que le mode courant soit le mode armé alors ledit procédé peut comporter une commande de l'afficheur tête-haute avec le système de commande et un affichage sur l'afficheur tête-haute dudit symbole selon une troisième charte graphique différente de la première charte graphique et de la deuxième charte graphique.

Ainsi, un opérateur peut savoir si un mode de pilotage automatique est désengagé, armé ou engagé avec le symbole porteur de la valeur courante du paramètre concerné.

Selon une possibilité compatible avec les précédentes, durant un changement de mode pour passer d'un ancien mode à un nouveau mode choisis parmi lesdits plusieurs modes de fonctionnement, ledit procédé peut comporter une commande de l'afficheur tête-haute avec le système de commande et un affichage sur l'afficheur tête-haute dudit symbole, pendant une durée transitoire prédéterminée, alternativement selon la charte graphique de l'ancien mode et la charte graphique du nouveau mode.

Cette caractéristique permet d'attirer l'attention d'un opérateur pour lui indiquer que le système de pilotage automatique change de mode de fonctionnement pour le paramètre concerné, là encore sans ajouter un symbole dédié.

Selon une possibilité compatible avec les précédentes, le procédé peut comporter une détection que la valeur courante est différente de la valeur de consigne, et sous condition que la valeur courante soit différente de la valeur de consigne, le procédé peut comporter une commande de l'afficheur tête-haute avec le système de commande et un affichage sur l'afficheur tête-haute de la valeur de consigne en vis-à-vis dudit symbole.

La valeur de consigne peut être à proximité immédiate du symbole associé. Eventuellement un segment peut relier la valeur de consigne et le symbole pour qu'un opérateur fasse immédiatement le lien entre la valeur de consigne et le paramètre concerné.

Eventuellement, cette caractéristique permet à un opérateur de savoir en plus si la consigne du système de pilotage automatique est atteinte.

Eventuellement, la valeur de consigne peut être disposée aux yeux d'un opérateur au-dessus du symbole lorsque la valeur de consigne est supérieure à la valeur courante et en dessous du symbole lorsque la valeur de consigne est inférieure à la valeur courante.

Cette caractéristique permet à un opérateur de savoir en plus si la consigne est supérieure ou inférieure à la valeur courante du paramètre.

Eventuellement, un segment s'étend de la valeur de consigne au symbole associé

Eventuellement, une distance séparant la valeur de consigne et le symbole associé varie en fonction d'un écart séparant la valeur de consigne de la valeur courante du paramètre concerné. Cette distance peut être obtenue à l'aide d'une loi donnant la distance uniquement en fonction de l'écart précité.

Ainsi, cette valeur de consigne translate progressivement en se rapprochant (respectivement : s'éloignant) de la valeur courante au fur et à mesure que l'aéronef se rapproche (respectivement : s'éloigne) de ladite consigne. Le cas échéant l'éventuel segment se raccourcit (respectivement : s'allonge) en adéquation avec la translation.

Ainsi, le positionnement de la valeur de consigne par rapport au symbole associé est porteur de l'écart numérique entre cette valeur de consigne et la valeur courante portée par ce symbole.

Outre un procédé, l'invention vise un aéronef mettant en œuvre ce procédé.

Un tel aéronef comprend un afficheur tête-haute et un système de pilotage automatique, le système de pilotage automatique comprenant une interface homme-machine de sélection pour choisir un mode de fonctionnement parmi plusieurs modes prédéterminés comprenant un mode désengagé et un mode engagé afin de requérir un pilotage automatique d'au moins un paramètre, le système de pilotage automatique étant configuré dans le mode engagé pour contrôler au moins un actionneur de l'aéronef afin de faire tendre une valeur courante d'un paramètre piloté vers une valeur de consigne, ledit aéronef comprenant un système de commande pour commander ledit afficheur tête-haute.

Le système de commande et l'afficheur tête-haute sont alors configurés pour appliquer le procédé de l'invention. En particulier, l'afficheur tête-haute peut être monochrome.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention,
la figure 2, un schéma présentant un afficheur tête-basse de l'aéronef,
la figure 3, un schéma présentant illustrant le procédé de l'invention,
la figure 4, un schéma montrant un afficheur tête-haute d'un aéronef selon l'invention pour illustrer le procédé de l'invention, et
la figure 5, un schéma montrant un afficheur tête-haute d'un aéronef selon l'invention pour illustrer le procédé de l'invention.

Les éléments présents dans plusieurs figures distinctes sont affectés d'une seule et même référence.

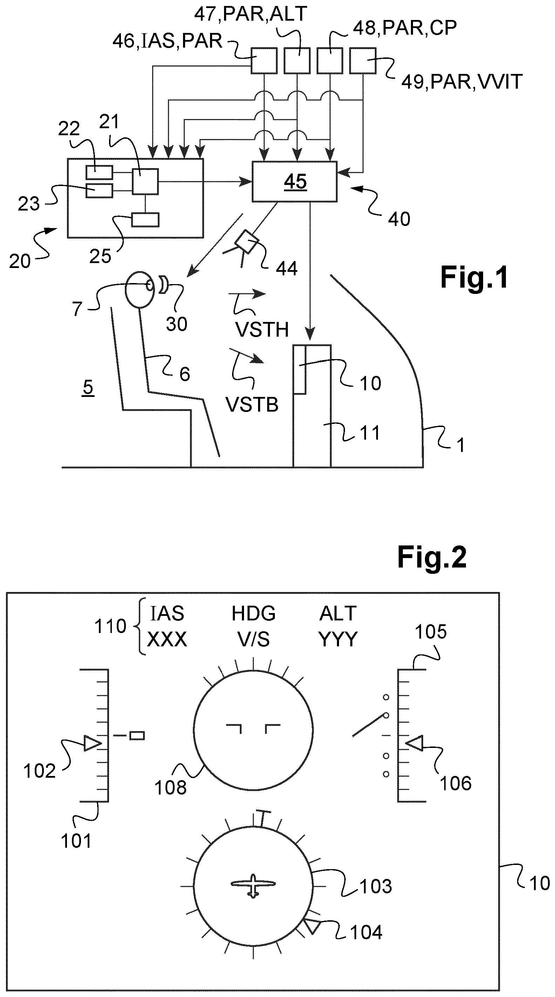

La figure 1 présente un aéronef 1 du type de l'invention, tel qu'un avion ou un giravion. Seuls les organes de l'aéronef 1 ayant un lien direct avec l'invention sont illustrés pour ne pas alourdir inutilement la figure 1.

Cet aéronef 1 comporte un cockpit 5 dans lequel se trouve au moins un opérateur 6.

Cet aéronef 1 comporte un système de pilotage automatique 20. Un tel système de pilotage automatique 20 est parfois dénommé AFCS, l'acronyme AFCS correspondant à l'expression anglaise « Automatic Flight Control System ».

Le système de pilotage automatique 20 comporte au moins un actionneur 25 permettant de piloter l'aéronef 1 pour faire tendre la valeur courante d'un paramètre PAR vers une valeur de consigne. Par exemple, sur un giravion muni d'une voilure tournante, un actionneur peut être étendu ou rétracté ou mis en rotation pour modifier le pas des pales de la voilure tournante. Cet exemple est simplement donné pour illustrer l'invention.

Le ou les actionneurs peuvent être pilotés par un calculateur de pilotage automatique 21 relié par des liaisons filaires ou non filaires à le ou les actionneurs 25. Le calculateur de pilotage automatique 21 peut comprendre, par exemple, au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs, ce système de pilotage automatique 20 peut être muni d'une interface homme-machine de réglage reliée par une liaison filaire ou non filaire au calculateur de pilotage automatique 21 afin de paramétrer la ou les valeurs de la ou des consignes.

En outre, le système de pilotage automatique 20 est relié à un ou des senseurs directement ou via au moins un calculateur avionique par une liaison d'un réseau de communication. Le ou les senseurs permettent d'estimer la ou les valeurs courantes du ou des paramètres pouvant être pilotés par le système de pilotage automatique 20. Chaque senseur génère un signal par exemple numérique ou analogique, électrique ou optique relatif à au moins un paramètre. Chaque senseur peut comprendre un capteur capable de mesurer directement le paramètre en question mais aussi un système pouvant comprendre un ou des capteurs physiques ainsi que des moyens de traitement du signal permettant de fournir une estimation du paramètre à partir des mesures fournies par ce ou ces capteurs.

A titre d'exemple illustratif, l'aéronef 1 peut comprendre un senseur de vitesse 46 pour mesurer un paramètre PAR de type vitesse air indiquée IAS. Un tel senseur de vitesse 46 peut comprendre par exemple un anémomètre.

L'aéronef 1 peut comprendre un senseur d'altitude 47 pour mesurer un paramètre PAR de type altitude ALT. Un tel senseur d'altitude 47 peut comprendre par exemple un radio-altimètre.

L'aéronef 1 peut comprendre un senseur de cap 48 pour mesurer un paramètre PAR de type cap CP. Un tel senseur de cap 48 peut comprendre par exemple un compas.

L'aéronef 1 peut comprendre un senseur de vecteur de direction de vol 49 pour mesurer un paramètre PAR de type vecteur de direction de vol VVIT. Un tel senseur de vecteur de direction de vol 49 peut comprendre par exemple une centrale inertielle.

Par ailleurs, le système de pilotage automatique 20 est muni d'une interface homme-machine de sélection 22 permettant à l'opérateur 6 de choisir pour un ou plusieurs paramètres PAR un mode de pilotage automatique dénommé plus simplement mode de fonctionnement. Ce mode de fonctionnement peut être soit un mode désengagé, soit un mode engagé, voire un mode armé. Lorsque le mode désengagé est activé pour un paramètre, le système de pilotage automatique ne réalise aucune action pour ce paramètre. Lorsque le mode armé est activé pour un paramètre, une valeur de consigne peut être paramétrée. Lorsque le mode engagé est activé pour la tenue d'un paramètre PAR, le système de pilotage automatique 20, et en particulier le calculateur de pilotage automatique 21, est configuré pour contrôler au moins un actionneur 25 afin de faire tendre la valeur du paramètre PAR, évaluée avec le ou les senseurs requis, vers une valeur de consigne.

Par ailleurs, l'aéronef 1 est muni d'afficheurs pour présenter diverses informations aux yeux 7 de l'opérateur 6.

En particulier, l'aéronef 1 peut comprendre un afficheur tête-basse 10 visible par l'opérateur 6 lorsque son regard suit une ligne de vision tête-basse VSTB. L'afficheur tête-basse 10 est éventuellement porté par un pupitre ou un tableau de bord 11. Un tel afficheur tête-basse 10 peut comprendre un écran, et par exemple un écran multifonction connu sous l'acronyque MFD et l'expression anglaise « Multi Functions Display ».

En référence à la figure 2, un tel afficheur tête-basse 10 peut présenter une image comprenant de nombreuses informations, et par exemple un indicateur de vitesse 101 présentant le cas échéant une consigne de vitesse 102, une rose de cap 103 présentant le cas échéant une consigne de cap 104, un indicateur d'altitude barométrique 105 présentant le cas échéant une consigne d'altitude 106, un horizon artificiel 108, et un bandeau de pilotage automatique 110 présentant les modes de pilotage automatiques engagés et les valeurs de consigne associées.

En outre, l'aéronef 1 comprend un afficheur tête-haute 30 et un système de commande 40 pour commander cet afficheur tête-haute 30. Le système de commande 40 est configuré pour transmettre un signal vers l'afficheur tête-haute 30, l'afficheur tête-haute 30 affichant un ou des symboles suite à la réception de ce signal. Eventuellement, l'afficheur tête-haute 30 est monochrome. L'afficheur tête-haute 30 affiche alors des symboles dans une unique couleur, usuellement verte.

L'afficheur tête-haute 30 peut être fixe, par exemple du type HUD ou peut être porté. L'afficheur tête-haute 30 peut être d'un type usuel, et par exemple peut être un système dénommé « head mounted display » en langue anglaise, un système dénommé « head worn display », un système dénommé « near eye display » en langue anglaise, un système dénommé « Helmet Mounted Display » lorsque monté sur un casque ou encore par exemple « Helmet Mounted Sight & Display ».

L'afficheur tête-haute 30, voire l'afficheur tête-basse 10 peuvent être commandés par un calculateur dénommé par commodité « calculateur d'affichage 45 ». Un calculateur d'affichage 45 est ainsi relié par une connexion filaire ou non filaire à l'afficheur tête-haute 30 voire à l'afficheur tête-basse 10. Eventuellement, le calculateur d'affichage 45 et le calculateur de pilotage automatique 21 peuvent former un seul et même calculateur.

Le calculateur d'affichage 45 peut comprendre un ou plusieurs calculateurs générateurs de symboles. Par exemple, le calculateur d'affichage 45 peut comprendre un calculateur générateur de symboles tête-haute et un calculateur générateur de symboles tête-basse. Selon un autre exemple, le calculateur d'affichage 45 peut comprendre un unique calculateur générateur de symboles. Chaque calculateur générateur de symboles peut comprendre par exemple au moins un processeur et au moins une mémoire, au moins un circuit intégré, au moins un système programmable, au moins un circuit logique, ces exemples ne limitant pas la portée donnée à l'expression « calculateur générateur de symbole ». Le terme processeur peut désigner aussi bien une unité centrale de traitement connue sous l'acronyme CPU, une unité graphique de traitement GPU, une unité digitale connue sous l'acronyme DSP, un microcontrôleur...

Le calculateur d'affichage 45 peut être relié directement ou indirectement aux divers senseurs de l'aéronef 1, et notamment aux senseurs 46-49 précités.

Par ailleurs, le calculateur d'affichage 45 peut être relié à un dispositif de positionnement 44 déterminant une information relative à la position voire à l'orientation de l'afficheur tête-haute 30, dans le cas d'un afficheur tête-haute 30 porté.

Le dispositif de positionnement 44 est relié au calculateur d'affichage 45 par une liaison filaire ou non filaire afin de lui transmettre un signal par exemple analogique ou numérique. Ce signal permet au calculateur d'affichage 45 de déterminer selon une technique connue où positionner certains symboles. Selon l'exemple illustré, le dispositif de positionnement 44 comporte ainsi au moins une caméra.

Les exemples donnés sont fournis à titre illustratif. Le système de commande 40 et le système de pilotage automatique 20 peuvent en effet être d'un autre type connu sans sortir du cadre des revendications.

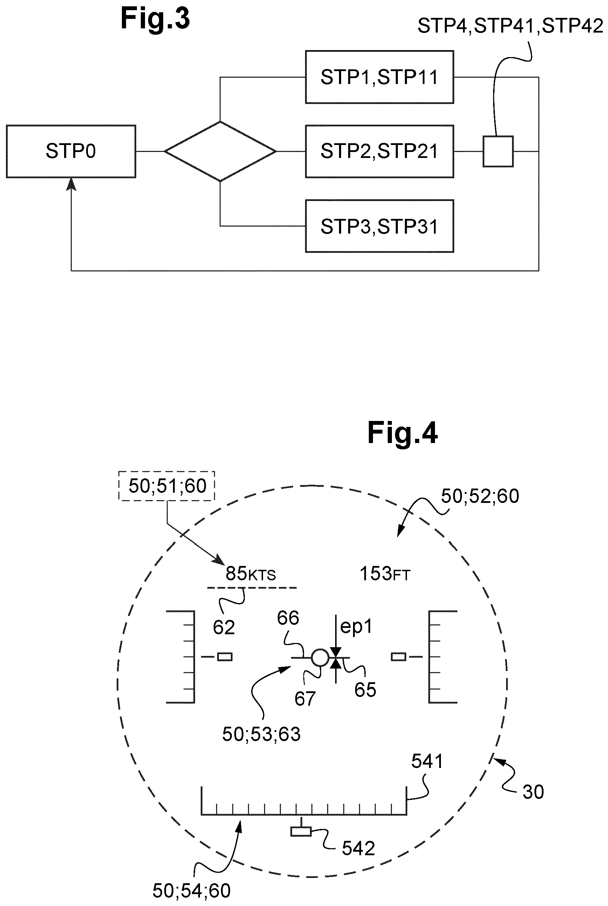

Indépendamment de la manière de réalisation de l'afficheur tête-haute 30 ainsi que du système de commande 40 et du système de pilotage automatique 20, le système de commande 40 et l'afficheur tête-haute 30 sont configurés pour appliquer le procédé illustré schématiquement sur la figure 3. Ce procédé comporte une ou plusieurs des étapes suivantes réalisées en boucle.

Ce procédé comporte, pour au moins un paramètre PAR, une détection STP0 avec un système de commande 40 d'un mode courant appliqué par le système de pilotage automatique 20. Le mode courant est de fait choisi par un opérateur 6 parmi les modes de fonctionnement prédéterminés du système de pilotage automatique 20. Par exemple, l'interface homme-machine de sélection 22 transmet un signal porteur du mode courant à appliquer au système de commande 40, éventuellement au calculateur d'affichage 45, directement ou via le calculateur de pilotage automatique 21.

Dès lors, le procédé comporte la commande STP1, STP2, STP3 de l'afficheur tête-haute 30 avec le système de commande 40, et en particulier avec le calculateur d'affichage 45. Le système de commande 40 transmet alors un signal de commande à l'afficheur tête-haute 30 qui varie en fonction du mode courant appliqué pour chaque paramètre PAR. Le signal de commande peut comprendre les symboles à afficher. Suite à la réception du signal de commande, le procédé comporte alors, pour chaque paramètre PAR, un affichage STP11, STP21 STP31 sur l'afficheur tête-haute 30 d'un symbole 50 porteur de la valeur courante du paramètre PAR selon une charte graphique propre au mode courant.

Ainsi, lorsque le mode de fonctionnement du système de pilotage automatique 20 est le mode désengagé pour un paramètre PAR, le calculateur d'affichage 45 réalise la commande STP1 de l'afficheur tête-haute 30 en lui transmettant un signal de commande. Suite à la réception de ce signal de commande, l'afficheur tête-haute 30 réalise un affichage STP11 d'un symbole porteur de la valeur courante de ce paramètre PAR selon une première charte graphique. La première charte graphique définit l'aspect à donner à ce symbole.

Ce symbole peut comprendre un objet. Cet objet peut être un nombre égal à la valeur courante, une échelle et un curseur pointant sur l'échelle une valeur égale à la valeur courante par exemple, une forme géométrique. Dès lors, la charte graphique peut définir par exemple l'épaisseur d'au moins un trait d'un objet, l'ajout ou non d'un cadre au moins partiellement autour de l'objet, quelle forme doit avoir l'objet...

Lorsque le mode de fonctionnement du système de pilotage automatique 20 est le mode engagé pour un paramètre PAR, le calculateur d'affichage 45 réalise la commande STP2 de l'afficheur tête-haute 30 en lui transmettant un signal de commande. Suite à la réception de ce signal de commande, l'afficheur tête-haute 30 réalise un affichage STP21 d'un symbole porteur de la valeur courante de ce paramètre PAR selon une deuxième charte graphique. L'aspect du symbole est différent avec la deuxième charte graphique de l'aspect obtenu avec la première charte graphique pour une même valeur du paramètre PAR.

Lorsque le mode de fonctionnement du système de pilotage automatique 20 est le mode armé pour un paramètre PAR, le calculateur d'affichage 45 réalise la commande STP32 de l'afficheur tête-haute 30 en lui transmettant un signal de commande. Suite à la réception de ce signal de commande, l'afficheur tête-haute 30 réalise un affichage STP31 d'un symbole porteur de la valeur courante de ce paramètre PAR selon une troisième charte graphique. La troisième charte graphique définit l'aspect à donner à ce symbole, l'aspect du symbole étant différent de l'aspect obtenu avec la première charte graphique et la deuxième charte graphique pour une même valeur du paramètre PAR.

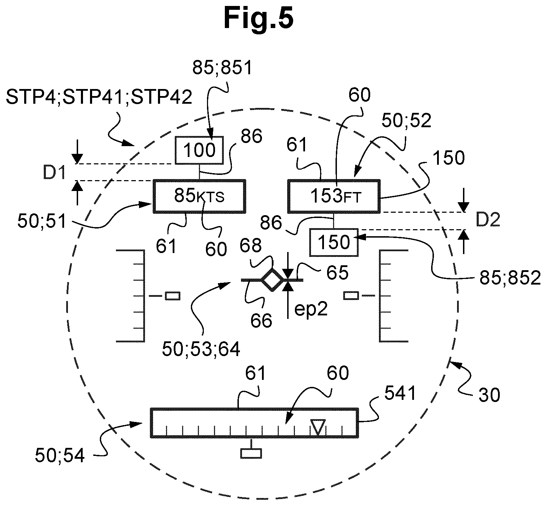

Les figures 4 et 5 illustrent le procédé de l'invention avec des exemples.

La figure 4 illustre l'affichage de symboles 50 associés à des paramètres PAR pour lesquels le système de pilotage automatique 20 n'est pas engagé. La figure 5 illustre l'affichage de symboles 50 associés à ces mêmes paramètres PAR mais pour lesquels le système de pilotage automatique 20 est engagé. La référence 50 désigne n'importe quel symbole, les références 51 à 54 désignant des symboles particuliers.

Selon l'exemple illustré sur la figure 4, l'afficheur tête-haute 30 peut présenter un symbole 51 porteur de la valeur courante de la vitesse air indiquée mesurée avec le senseur de vitesse 46, un symbole 52 porteur de la valeur courante de l'altitude mesurée avec le senseur d'altitude 47, un symbole 54 porteur de la valeur courante de cap mesurée avec le senseur de cap 48 et un symbole 53 porteur du vecteur de direction de vol courant affiché de manière conforme et mesuré avec le senseur de vecteur de direction de vol 49.

Selon une première variante, un symbole 50 peut comporter un objet 60 selon la première charte graphique, et ce même objet 60 et un cadre 61 l'entourant au moins partiellement selon la deuxième charte graphique.

Selon la figure 4, cet objet 60 peut comprendre un nombre égal à la valeur courante du paramètre PAR associé, voire des lettres formant l'unité utilisée, tel qu'illustré sur le symbole 51 porteur de la valeur courante de la vitesse air indiquée et sur le symbole 52 porteur de la valeur courante de l'altitude. Un objet 60 peut alternativement comprendre une échelle 541 et un pointeur 542, tel qu'illustré avec le symbole 54 porteur de la valeur courante de cap.

Eventuellement, l'objet 60 peut être souligné lors de l'application de la troisième charte graphique pour signaler que le mode de pilotage automatique associé au paramètre PAR associé est le mode armé. Le symbole 51 porteur de la valeur courante de la vitesse air indiquée comporte ainsi des traits discontinus sous l'objet correspondant pour illustrer cette possibilité.

En référence à la figure 5, lorsque le système de pilotage automatique est engagé pour piloter les paramètres PAR précités, un symbole 50 comporte un cadre 61 qui entoure au moins partiellement l'objet 60. Ainsi, le symbole 51 et le symbole 52 comportent tous deux un objet 60 totalement encadré par un cadre 61 rectangulaire selon l'exemple donné, alors que le symbole 54 comporte un cadre 61 qui entoure partiellement son objet. Le cadre 61 peut toutefois avoir une toute autre forme et par exemple une forme hexagonale.

Selon une deuxième variante et en référence à la figure 4, ledit symbole 53 peut comporter un premier objet 63 selon la première charte graphique. Ainsi, le symbole 53 porteur du vecteur de direction de vol comporte une première forme géométrique comprenant deux segments 65, 66 de part et d'autre d'un cercle 67, les deux segments 65, 66 étant alignés.

Par contre et tel qu'illustré sur la figure 5, ce même symbole 53 peut comporter selon la deuxième charte graphique un deuxième objet 64 différent visuellement du premier objet 63.

Par exemple, le premier objet 63 comporte une première forme géométrique, le deuxième objet 64 comporte une deuxième forme géométrique différente. Ainsi, le symbole 53 porteur du vecteur de direction de vol comporte désormais une deuxième forme géométrique comprenant deux segments 65, 66 de part et d'autre non plus d'un cercle 67 mais d'un losange 68, les deux segments 65, 66 étant alignés.

Par exemple, le premier objet 63 et le deuxième objet 64 peuvent comporter au moins un même trait. Ainsi, le premier objet 63 et le deuxième objet 64 comprennent tous deux les segments 65, 66 selon l'exemple du symbole 53. Toutefois, les traits 65, 66 présentent une première épaisseur ep1 dans le premier objet 63 visible sur la figure 4 et une seconde épaisseur ep2 supérieure à la première épaisseur ep1 au sein du deuxième objet 64 visible sur la figure 5.

Quelle que soit la variante, la charte graphique appliquée n'influe pas la position du symbole 50 sur l'afficheur tête-haute 30. Pour une même valeur courante d'un paramètre PAR, le symbole 50 associé est dans la même position, à savoir dans une même zone restreinte de l'afficheur tête-haute 30, quelle que soit la charte graphique appliquée.

Par ailleurs, lors d'une phase transitoire de passage d'un ancien mode à un nouveau mode choisis parmi lesdits modes de fonctionnement possibles du système de pilotage automatique 20, par exemple pour illustrer un passage du mode désengagé au mode engagé, le système de commande 40 peut commander l'afficheur tête-haute 30, pour afficher sur l'afficheur tête-haute 30 le symbole 50 concerné, pendant une durée transitoire prédéterminée, alternativement selon la charte graphique de l'ancien mode et la charte graphique du nouveau mode.

Selon un autre aspect de l'invention et en référence à la figure 5, le système de commande 40 peut être configuré pour effectuer une détection STP4 que la valeur courante d'un paramètre est différente de sa valeur de consigne transmise par le système de pilotage automatique 20. Dans ce cas, le procédé de l'invention peut comprendre une commande STP41 transmise du système de commande 40 à l'afficheur tête-haute 30 pour requérir un affichage STP42 sur l'afficheur tête-haute 30 de la valeur de consigne 85 en vis-à-vis du symbole 50 concerné. Un segment 86 peut éventuellement s'étendre de la valeur de consigne au symbole 50. Eventuellement, la valeur de consigne est disposée aux yeux 7 de l'opérateur 6 au-dessus du symbole 50 lorsque la valeur de consigne 85 est supérieure à la valeur courante et en dessous du symbole 50 lorsque la valeur de consigne 85 est inférieure à la valeur courante. Selon l'exemple illustré une valeur de consigne 851 de la vitesse air indiquée est ainsi disposée au-dessus du symbole 51 et une valeur de consigne 852 de l'altitude est disposée en dessous du symbole 52.

Eventuellement, une distance D1, D2 séparant la valeur de consigne et le symbole associé varie en fonction du résultat d'une soustraction entre la valeur de consigne et la valeur courante du paramètre concerné. Il en va de même pour la longueur du segment éventuellement affiché. Bien que plusieurs modes de réalisation aient été décrits, on comprend bien qu'il n'est pas concevable d'identifier de manière exhaustive tous les modes

## Revendications

1. Procédé d'aide au pilotage d'un aéronef (1) comprenant un afficheur tête-haute (30) et un système de pilotage automatique (20), le système de pilotage automatique (20) comprenant une interface homme-machine de sélection (20) pour choisir un mode de fonctionnement parmi plusieurs modes de fonctionnement prédéterminés comprenant un mode désengagé et un mode engagé afin de requérir un pilotage automatique d'au moins un paramètre, le système de pilotage automatique (20) étant configuré dans le mode engagé pour contrôler au moins un actionneur (25) de l'aéronef (1) afin de faire tendre une valeur courante dudit paramètre (PAR) vers une valeur de consigne, le procédé comportant les étapes suivantes :
- détection (STP0) avec un système de commande (40) d'un mode courant appliqué parmi lesdits plusieurs modes de fonctionnement prédéterminés,
- commande (STP1, STP2, STP3) de l'afficheur tête-haute (30) avec le système de commande (40), et affichage (STP11, STP21 STP31) sur l'afficheur tête-haute (30) d'un symbole (50) porteur de ladite valeur courante,
**caractérisé en ce que** ledit affichage (STP11, STP21 STP31) sur l'afficheur tête-haute (30) d'un symbole (50) porteur de ladite valeur courante est effectué selon une charte graphique propre au mode courant pour visualiser le mode courant, une première charte graphique appliquée lors du mode désengagé étant différente d'une deuxième charte graphique appliquée lors du mode engagé.

2. Procédé selon la revendication 1,
**caractérisé en ce que**, pour une même valeur courante, le symbole (50) est dans une même position sur l'afficheur tête-haute (30) quel que soit le mode courant.

3. Procédé selon l'une quelconque des revendications 1 à 2,
**caractérisé en ce que** ledit symbole (50) comporte un objet (60) selon la première charte graphique, ledit symbole (50) comportant ledit objet (60) et un cadre (61) entourant au moins partiellement l'objet (60) selon la deuxième charte graphique.

4. Procédé selon l'une quelconque des revendications 1 à 3,
**caractérisé en ce que** ledit symbole (50) comporte un premier objet (63) selon la première charte graphique, ledit symbole (50) comportant selon la deuxième charte graphique un deuxième objet (64) différent visuellement du premier objet (63).

5. Procédé selon la revendication 4,
**caractérisé en ce que** ledit premier objet (63) comporte une première forme géométrique, le deuxième objet (64) comportant une deuxième forme géométrique, la deuxième forme étant différente visuellement de la première forme.

6. Procédé selon l'une quelconque des revendications 4 à 5,
**caractérisé en ce que** le premier objet (63) et le deuxième objet (64) comporte au moins un même trait (65, 66), le trait (65, 66) présentant une première épaisseur (ep1) dans le premier objet (63), le trait (65, 66) présentant dans le deuxième objet (64) une seconde épaisseur (ep2) supérieure à la première épaisseur (ep1).

7. Procédé selon l'une quelconque des revendications 1 à 6,
**caractérisé en ce que** lesdits plusieurs modes de fonctionnement comportent un mode armé durant lequel ladite valeur de consigne est paramétrée, sous condition que le mode courant soit le mode armé alors ledit procédé comporte une commande (STP3) de l'afficheur tête-haute (30) avec le système de commande (40) et un affichage (STP31) sur l'afficheur tête-haute (30) dudit symbole (50) selon une troisième charte graphique différente de la première charte graphique et de la deuxième charte graphique.

8. Procédé selon l'une quelconque des revendications 1 à 7,
**caractérisé en ce que** durant un changement de mode pour passer d'un ancien mode à un nouveau mode choisis parmi lesdits plusieurs modes de fonctionnement, ledit procédé comporte une commande de l'afficheur tête-haute avec le système de commande (40) et un affichage sur l'afficheur tête-haute (30) dudit symbole, pendant une durée transitoire prédéterminée, alternativement selon la charte graphique de l'ancien mode et la charte graphique du nouveau mode.

9. Procédé selon l'une quelconque des revendications 1 à 8,
**caractérisé en ce que** ledit procédé comporte une détection (STP4) que la valeur courante est différente de la valeur de consigne, et sous condition que la valeur courante soit différente de la valeur de consigne, le procédé comporte une commande (STP41) de l'afficheur tête-haute (30) avec le système de commande (40) et un affichage (STP42) sur l'afficheur tête-haute (30) de la valeur de consigne en vis-à-vis dudit symbole.

10. Procédé selon la revendication 9,
**caractérisé en ce que** la valeur de consigne est disposée aux yeux d'un opérateur au-dessus du symbole lorsque la valeur de consigne est supérieure à la valeur courante et en dessous du symbole lorsque la valeur de consigne est inférieure à la valeur courante.

11. Procédé selon l'une quelconque des revendications 9 à 10,
**caractérisé en ce qu'**une distance séparant la valeur de consigne et le symbole associé varie en fonction d'un écart séparant la valeur de consigne de la valeur courante du paramètre concerné.

12. Aéronef (1) comprenant un afficheur tête-haute (30) et un système de pilotage automatique (20), le système de pilotage automatique (20) comprenant une interface homme-machine de sélection (20) pour choisir un mode de fonctionnement parmi plusieurs modes prédéterminés comprenant un mode désengagé et un mode engagé afin de requérir un pilotage automatique d'au moins un paramètre, le système de pilotage automatique (20) étant configuré dans le mode engagé pour contrôler au moins un actionneur (25) de l'aéronef (1) afin de faire tendre une valeur courante du paramètre piloté vers une valeur de consigne, ledit aéronef (1) comprenant un système de commande (40) pour commander ledit afficheur tête-haute (30),
**caractérisé en ce que** le système de commande (40) et l'afficheur tête-haute (30) sont configurés pour appliquer le procédé selon l'une quelconque des revendications 1 à 10.

13. Aéronef selon la revendication 11,
caractérisé en ce ledit afficheur tête-haute (30) est monochrome.

## Patentansprüche

1. Verfahren zur Unterstützung der Steuerung eines Luftfahrzeugs (1) mit einem Head-up-Display (30) und einem automatischen Steuerungssystem (20), wobei das automatische Steuerungssystem (20) eine Mensch-Maschine-Auswahlschnittstelle (20) zum Auswählen eines Betriebsmodus aus mehreren vorgegebenen Modi, darunter ein inaktiver Modus und ein aktiver Modus, zum Anfordern einer automatischen Steuerung mindestens eines Parameters umfasst, wobei das automatische Steuerungssystem (20) im aktiven Modus so konfiguriert ist, dass es mindestens einen Aktuator (25) des Luftfahrzeugs (1) steuert, um einen aktuellen Wert des Parameters (PAR) auf einen Sollwert zu bringen, wobei das Verfahren die folgenden Schritte umfasst:
- Erfassen (STP0) eines der mehreren vorgegebenen Betriebsmodi mit einem Steuerungssystem (40),
- Steuern (STP1, STP2, STP3) des Head-up-Displays (30) mit dem Steuerungssystem (40) und Anzeigen (STP11, STP21, STP31) eines Symbols (50) mit dem aktuellen Wert auf dem Head-up-Display (30),
**dadurch gekennzeichnet, dass** das Anzeigen (STP11, STP21, STP31) eines Symbols (50) mit dem aktuellen Wert auf dem Head-up-Display (30) in einer für den aktuellen Modus spezifischen Darstellung erfolgt, um den aktuellen Modus anzuzeigen, wobei eine erste Darstellung, die im inaktiven Modus angewendet wird, sich von einer zweiten Darstellung unterscheidet, die im aktiven Modus angewendet wird.

2. Verfahren nach Anspruch 1,
**dadurch gekennzeichnet, dass** das Symbol (50) für einen gleichen aktuellen Wert unabhängig vom aktuellen Modus an derselben Position auf dem Head-up-Display (30) angezeigt wird.

3. Verfahren nach einem der Ansprüche 1 bis 2,
**dadurch gekennzeichnet, dass** das Symbol (50) gemäß der ersten Darstellung ein Objekt (60) umfasst und das Symbol (50) gemäß der zweiten Darstellung das Objekt (60) und einen Rahmen (61) umfasst, der das Objekt (60) zumindest teilweise umgibt.

4. Verfahren nach einem der Ansprüche 1 bis 3,
**dadurch gekennzeichnet, dass** das Symbol (50) gemäß der ersten Darstellung ein erstes Objekt (63) umfasst und das Symbol (50) gemäß der zweiten Darstellung ein zweites Objekt (64) umfasst, das sich vom ersten Objekt (63) optisch unterscheidet.

5. Verfahren nach Anspruch 4,
**dadurch gekennzeichnet, dass** das erste Objekt (63) eine erste geometrische Form aufweist, das zweite Objekt (64) eine zweite geometrische Form aufweist, und die zweite Form sich von der ersten Form optisch unterscheidet.

6. Verfahren nach einem der Ansprüche 4 bis 5,
**dadurch gekennzeichnet, dass** das erste Objekt (63) und das zweite Objekt (64) mindestens einen gleichen Strich (65, 66) aufweisen, wobei der Strich (65, 66) im ersten Objekt (63) eine erste Dicke (ep1) aufweist und der Strich (65, 66) im zweiten Objekt (64) eine zweite Dicke (ep2) aufweist, die größer ist als die erste Dicke (ep1).

7. Verfahren nach einem der Ansprüche 1 bis 6,
**dadurch gekennzeichnet, dass** die mehreren Betriebsmodi einen scharfgeschalteten Modus umfassen, in dem der Sollwert parametriert wird, und unter der Bedingung, dass der aktuelle Modus der scharfgeschaltete Modus ist, das Verfahren ein Steuern (STP3) des Head-up-Displays (30) durch das Steuerungssystem (40) und ein Anzeigen (STP31) des Symbols (50) auf dem Head-up-Display (30) gemäß einer dritten Darstellung umfasst, die sich von der ersten Darstellung und der zweiten Darstellung unterscheidet.

8. Verfahren nach einem der Ansprüche 1 bis 7,
**dadurch gekennzeichnet, dass** während eines Moduswechsels von einem alten Modus zu einem aus den mehreren Betriebsmodi ausgewählten neuen Modus das Verfahren ein Steuern des Head-up-Displays durch das Steuerungssystem (40) und ein Anzeigen des Symbols auf dem Head-up-Display (30) während einer vorgegebenen Übergangszeit abwechselnd gemäß der Darstellung des alten Modus und der Darstellung des neuen Modus umfasst.

9. Verfahren nach einem der Ansprüche 1 bis 8,
**dadurch gekennzeichnet, dass** das Verfahren ein Erfassen (STP4) umfasst, dass der aktuelle Wert vom Sollwert abweicht, und unter der Bedingung, dass der aktuelle Wert vom Sollwert abweicht, das Verfahren ein Steuern (STP41) des Head-up-Displays (30) durch das Steuerungssystem (40) und ein Anzeigen (STP42) des Sollwerts auf dem Head-up-Display (30) gegenüber dem Symbol umfasst.

10. Verfahren nach Anspruch 9,
**dadurch gekennzeichnet, dass** der Sollwert im Blickfeld eines Bedieners über dem Symbol angeordnet wird, wenn der Sollwert größer als der Istwert ist, und unterhalb des Symbols, wenn der Sollwert kleiner als der Istwert ist.

11. Verfahren nach einem der Ansprüche 9 bis 10,
**dadurch gekennzeichnet, dass** ein Abstand zwischen dem Sollwert und dem zugehörigen Symbol in Abhängigkeit von einer Abweichung zwischen dem Sollwert und dem aktuellen Wert des betreffenden Parameters variiert.

12. Luftfahrzeug (1) mit einem Head-up-Display (30) und einem automatischen Steuerungssystem (20), wobei das automatische Steuerungssystem (20) eine Mensch-Maschine-Auswahlschnittstelle (20) zum Auswählen eines Betriebsmodus aus mehreren vorgegebenen Modi, darunter ein inaktiver Modus und ein aktiver Modus, umfasst, zum Anfordern einer automatischen Steuerung mindestens eines Parameters, wobei das automatische Steuerungssystem (20) im aktiven Modus so konfiguriert ist, dass es mindestens einen Aktuator (25) des Luftfahrzeugs (1) steuert, um einen aktuellen Wert des gesteuerten Parameters auf einen Sollwert zu bringen, wobei das Luftfahrzeug (1) ein Steuerungssystem (40) zum Steuern des Head-up-Displays (30) umfasst,
**dadurch gekennzeichnet, dass** das Steuerungssystem (40) und das Head-up-Display (30) konfiguriert sind, um das Verfahren nach einem der Ansprüche 1 bis 10 anzuwenden.

13. Luftfahrzeug nach Anspruch 11,
**dadurch gekennzeichnet, dass** das Head-up-Display (30) monochrom ist.

## Claims

1. A method for assisting the piloting of an aircraft (1) comprising a head-up display (30) and an automatic flight control system (20), the automatic flight control system (20) comprising a human-machine selection interface (20) for choosing an operating mode from among several predetermined operating modes comprising a disengaged mode and an engaged mode in order to request an automatic control of at least one parameter, the automatic flight control system (20) being configured, in the engaged mode, to control at least one actuator (25) of the aircraft (1) in order to bring a current value of said parameter (PAR) towards a setpoint value, the method comprising the following steps:
- detecting (STP0), with a control system (40), an applied current mode from among said several predetermined operating modes,
- controlling (STP1, STP2, STP3) the head-up display (30) with the control system (40), and displaying (STP11, STP21, STP31) a symbol (50) carrying said current value on the head-up display (30),
**characterised in that** a symbol (50) carrying said current value is displayed (STP11, STP21, STP31) on the head-up display (30) according to a graphic charter specific to the current mode in order to display the current mode, a first graphic charter applied during the disengaged mode being different from a second graphic charter applied during the engaged mode.

2. The method according to claim 1,
**characterised in that**, for a given current value, the symbol (50) is in the same position on the head-up display (30), irrespective of the current mode.

3. The method according to any one of claims 1 to 2,
**characterised in that** said symbol (50) comprises an object (60) according to the first graphic charter, said symbol (50) comprising said object (60) and a frame (61) at least partially surrounding the object (60) according to the second graphic charter.

4. The method according to any one of claims 1 to 3,
**characterised in that** said symbol (50) comprises a first object (63) according to the first graphic charter, said symbol (50) comprising, according to the second graphic charter, a second object (64) which is visually different from the first object (63).

5. The method according to claim 4,
**characterised in that** said first object (63) comprises a first geometric shape, the second object (64) comprising a second geometric shape, the second shape being visually different from the first shape.

6. The method according to any one of claims 4 to 5,
**characterised in that** the first object (63) and the second object (64) comprise at least one common line (65, 66), the line (65, 66) being a first thickness (ep1) in the first object (63), the line (65, 66) being a second thickness (ep2) greater than the first thickness (ep1) in the second object (64).

7. The method according to any one of claims 1 to 6,
**characterised in that** said several operating modes comprise an armed mode, during which said setpoint value is parameterised; provided that the current mode is the armed mode then said method comprises controlling (STP3) the head-up display (30) with the control system (40) and displaying (STP31) said symbol (50) on the head-up display (30) according to a third graphic charter different from the first graphic charter and the second graphic charter.

8. The method according to any one of claims 1 to 7,
**characterised in that**, during a change in mode to switch from an old mode to a new mode chosen from said several operating modes, said method comprises controlling the head-up display with the control system (40) and displaying said symbol on the head-up display (30) for a predetermined transitional period, alternately according to the graphic charter of the old mode and the graphic charter of the new mode.

9. The method according to any one of claims 1 to 8,
**characterised in that** said method comprises detecting (STP4) that the current value is different from the setpoint value and, provided that the current value is different from the setpoint value, the method comprises controlling (STP41) the head-up display (30) with the control system (40) and displaying (STP42) the setpoint value opposite said symbol on the head-up display (30).

10. The method according to claim 9,
**characterised in that**, in relation to the eyes of an operator, the setpoint value is arranged above the symbol when the setpoint value is greater than the current value, and below the symbol when the setpoint value is less than the current value.

11. The method according to any one of claims 9 to 10,
**characterised in that** a distance separating the setpoint value and the associated symbol varies as a function of a difference separating the setpoint value from the current value of the parameter in question.

12. An aircraft (1) comprising a head-up display (30) and an automatic flight control system (20), the automatic flight control system (20) comprising a human-machine selection interface (20) for choosing an operating mode from among several predetermined modes comprising a disengaged mode and an engaged mode in order to request the automatic control of at least one parameter, the automatic flight control system (20) being configured, in the engaged mode, to control at least one actuator (25) of the aircraft (1) in order to bring a current value of the controlled parameter towards a setpoint value, said aircraft (1) comprising a control system (40) for controlling said head-up display (30),
**characterised in that** the control system (40) and the head-up display (30) are configured to apply the method according to any one of claims 1 to 10.

13. The aircraft according to claim 11,
**characterised in that** said head-up display (30) is monochromatic.
